# EUROPEAN PATENT APPLICATION

(11) **EP 1 726 518 A1**
(43) Date of publication of application: **29.11.2006**
(21) Application number: 05425377.8
(22) Date of filing: 27.05.2005
(51) Int. Cl.: B62M 3/00, F16D 1/06, F16D 3/06

(54) **Coupling profile between a central axle of a bottom bracket of a bicycle transmission and a pedal crank**

(71) Applicant: Campagnolo Srl, 36100 Vicenza (VI) (IT)
(72) Inventor: Dal Pra', Giuseppe, 36010 Zané (Vicenza) (IT); Dettori, Paolo, 36100 Vicenza (VI) (IT)
(74) Representative: Checcacci, Giorgio

(57) **Abstract**

The coupling profile (30) comprises, in a plane transversal to the axis (X) of the bottom bracket, outer arcs (CD) belonging to the same outer circumference (31) of the coupling, each of such outer arcs (CD) being flanked and filleted on one side to a power transmission line (AC) and on the opposite side to an idle line (DA), in which the power transmission line (AC) and the idle line (DA) are symmetrical with respect to the outer arc (CD) that separates them. The outer arc (CD) has an angular extension (δ) about the axis (X) of the bottom bracket equal to at least one tenth of the angular extension (γ) of the power transmission line (AC), and the power transmission line (AC) and the idle line (DA) are filleted to the outer arc (CD) according to an angle (β) smaller than 45°.

## Description

The present invention regards the coupling between a central axle of a bottom bracket of a bicycle transmission and a pedal crank, and specifically concerns a coupling profile, as well as a central axle and a pedal crank shaped according to such a profile.

In relation to a central axle and to a pedal crank of a bicycle transmission, by "coupling" the mutual mechanical interaction is meant between axle and pedal crank that makes the two elements integral in rotation about the axis of the bottom bracket, allowing the torque or rather power transmission between the pedal crank and the axle. In the same context, by "attachment", on the other hand, the mutual mechanical interaction is indicated that makes the two elements integral in translation in the direction of the axis of the bottom bracket, preventing the pedal crank from slipping off, thus ending the coupling.

The coupling between the ends of the central axle and a pedal crank (right or left) of the bicycle is obtained, according to the prior art, through insertion of the aforementioned ends, projecting outside of the frame, in suitable receiving seats made at the ends of the elongated body of which each of the two pedal cranks of the bicycle consist. Suitable means make the central axle and each of the pedal cranks integral in rotation; an attachment screw then ensures that the coupling between the axle and the pedal crank is maintained.

In the present patent text by "coupling profile" the ideal outline is meant that separates the body of the central axle from the body of a pedal crank coupled with it. Normally, such a line defines both the outer profile of the axle, and the inner profile of the receiving seat in the pedal crank, apart from the working tolerances; it is nevertheless possible for the aforementioned outer profile of the axle and inner profile of the seat to slightly depart from such an ideal outline, leaving small empty spaces between axle and seat.

The axle-pedal crank coupling must ensure high mechanical strength since during pedalling it is subjected to high and discontinuous stresses, in traction, in bending and in twisting. For such a purpose, known axle-pedal crank couplings provide for coupling profiles with particular geometric shapes (polygonal or with grooved profiles), so as to make shape couplings such as to make the pedal cranks integral in rotation with the central axle.

In such profiles, two or possibly three types of lines are defined that follow each other sequentially:
- a power transmission line, which is the line through which the pressing contact between the material of the pedal crank that pushes the material of the axle during pedalling forwards takes place;
- an idle line, which is the line through which during pedalling forwards there is contact but not pressing contact, thus without power transmission, since the material of the pedal crank is in front of the material of the axle in the direction of rotation; through this idle line there would be power transmission if backward pedalling were hypothetically provided, but stresses are in any case also transmitted during certain travel conditions, typically when the cyclist is standing up on the pedals and does not pedal (his weight, possibly accentuated by holes or irregularities in the road, weighs down not only on the pedal facing forwards but also on the pedal facing backwards, thus causing a counterthrust on the pedal crank);
- possibly, finally, a peripheral line that is formed from an outer arc of circumference of the coupling, or rather of the outer circumference of the axle, and that therefore cannot transmit power neither in one direction nor in the other, since it develops in the same direction as the rotation movement.

Therefore, the coupling profile is formed from a succession along all 360° about the axis of the axle ― in the direction of rotation during pedalling forwards ― of triads each formed from a power transmission line, a peripheral line or outer arc of circumference and from an idle line. On the axle and in the receiving seat in the pedal crank this succession determines a corresponding succession of ribs and grooves, extending axially; on the axle, each rib is defined by a power transmission line, an outer arc and an idle line, whereas conversely every groove is defined by an idle line and by a power transmission line; in the seat of the pedal crank, vice-versa, each rib is defined by an idle line and by a power transmission line, whereas conversely every groove is defined by a power transmission line, an outer arc and an idle line.

A known type of axle-pedal crank coupling is that known as ISIS standard (see "ISIS Drive - The International Spline Interface Standard, ISIS Drive Standard Committee, 2001), which provides a grooved coupling profile with a defined shape and precise size values for ribs and grooves.

In particular, according to such a standard, the axle has ten equally angularly spaced ribs on its outer surface that extend longitudinally along the axis of the axle, such ribs consisting of crest zones joined by as many depressions having, in section, a circular profile. The fitting between each crest and the adjacent depression consists of a corner of about 60°, by this meaning that at the fitting point the straight line tangent to the circular depression and the straight line tangent to the crest form an angle of about 60°.

Correspondingly, the pedal crank has a receiving seat with a profile having a shape substantially matching that of the outer profile of the axle and therefore has ten equally angularly spaced grooves that extend longitudinally along the axis of the hole; such grooves consist of corresponding bottom zones joined by as many protrusions projecting towards the axis of the hole, such protrusions having a substantially circular profile in section. The fitting between each bottom and the adjacent protrusion consists of a corner of about 60°.

Another axle-pedal crank coupling is known from EP-A2-1449760, where (fig. 4a and 4b; column 10, paragraph [0038])) a coupling profile of undulating shape is provided, with a succession of completely rounded grooves and protrusions, substantially the same as each other, which follow each other along the periphery of the profile.

A similar coupling, of undulating shape, is also shown by EP-A2-1120336 (fig. 3, 9 and 10).

A problem associated with this type of coupling is clearly that of mechanical strength, and such a problem is particularly serious since every bicycle always requires that the weight of each component is limited.

The present invention in particular tackles this problem by trying to make a axle-pedal crank coupling in which the mechanical stresses are distributed in a more homogeneous way, with respect to known solutions.

In its most general terms, therefore, the present invention concerns, in a first aspect thereof, a coupling profile according to what is defined by claim 1, and in further aspects thereof, a pedal crank and a axle according to what is defined by claims 11 and 15. Preferred characteristics are indicated in the dependent claims.

In particular, in its first aspect the invention concerns a coupling profile between a central axle of a bottom bracket of a bicycle transmission and a pedal crank, comprising, in a plane transversal to the axis of the bottom bracket, outer arcs belonging to the same outer circumference of the coupling, each of such outer arcs being flanked and filleted on one side to a power transmission line and on the opposite side to an idle line, in which the power transmission line and the idle line are symmetrical with respect to the outer arc that separates them, characterised in that the outer arc has an angular extension about the axis of the bottom bracket equal to at least one tenth of the angular extension of the power transmission line, and in that the power transmission line and the idle line are filleted to the outer arc according to an angle smaller than 45°.

Such a configuration allows uniform distribution of the stresses transmitted between pedal crank and axle. This profile, in particular, ensures more strength with respect to the profile of the ISIS standard quoted above, thanks to the absence of sharp edges in the zones subjected to high stresses; it also ensures easier assembly in general and centring in particular with respect to the undulating profiles of EP-A2-1449760 and EP-A2-1120336, that have no portions extending along the outer circumference of the profile.

Preferably, the outer arc has an angular extension about the axis of the bottom bracket equal to at least two tenths, and more preferably four tenths, of the angular extension of the power transmission line. The greater extension of the outer arcs implies a smaller number of ribs on the axle, but also greater extension thereof in the circumferential direction; it has been found that by increasing the angular extension of the outer arc the distribution of the stresses is overall more uniform, provided that, however, such an angular extension does not exceed the angular extension of the power transmission line.

In a particularly preferred embodiment, the profile comprises twenty triads each comprising a power transmission line, an outer arc and an idle line, in which the outer arc has an angular extension about the axis of the bottom bracket equal to about 3° and each of the power transmission line and the idle line has an angular extension of about 7.5°.

Preferably, the power transmission line and the idle line are filleted to the outer arc according to an angle less than 45°. Greater angles create stress concentration points and consequently structural weakness points on the bottom of the grooves in the seat of the pedal crank.

Preferably, the power transmission line and the idle line are filleted tangentially to the outer arc.

Preferably, the power transmission line and the idle line comprise line portions all filleted each other tangentially. The tangent fitting where the curvature changes is such as to minimise the concentration of the stresses.

The power transmission line and the idle line can have a variously defined curved progression. For the sake of simplicity of construction, the idle line and the power transmission line each comprise a first arc of circumference that is concave towards the axis of the bottom bracket and a second arc of circumference that is convex towards the axis of the bottom bracket; for the same reason of simplicity of construction, preferably, the second convex arc of the idle line and the second convex arc of the adjacent power transmission line are extensions of each other.

Again for the sake of simplicity of construction, but also to ensure uniformity in the distribution of stresses, the first concave arc and the second convex arc of the idle line and of the power transmission line have the same radius.

In its second aspect, the invention concerns a central axle of a bottom bracket of a bicycle transmission, comprising two coupling zones for pedal cranks close to each of its two ends, such zones being externally shaped according to a coupling profile in accordance with the first aspect of the invention.

For the screwing engagement with an attachment element of the pedal crank, the axle can be hollow and comprise an internal threading at at least one or both of its ends, or else, on the other hand, it can comprise, at at least one or both of its two ends and adjacent to the respective coupling zone for the pedal crank, a shank provided with an external threading for screwing engagement with an attachment element of the pedal crank. In the first case, the attachment element shall have a substantially screw-type configuration, whereas in the second case it shall have a substantially ring nut-type configuration.

Preferably, the axle is made from steel.

In the third aspect thereof, the invention concerns a pedal crank of a bicycle transmission, comprising a receiving seat for a central axle of a bottom bracket, characterised in that such a seat is shaped according to a coupling profile in accordance with the first aspect of the invention.

Preferably, at least the zone of the pedal crank in which the receiving seat is formed is made from aluminium alloy. The rest of the pedal crank can be either made from the same material, or be made from composite materials, such as carbon fibre and the like.

Further characteristics and advantages of the invention shall become clearer from the following description of preferred embodiments thereof, made with reference to the attached drawings. In such drawings:
- figure 1 is an exploded axonometric view of a first pedal crank - central axle pair according to the invention;
- figure 2 is an exploded axonometric view of a second pedal crank - central axle pair according to the invention;
- figure 3 is a partial view of a coupling profile according to the invention.

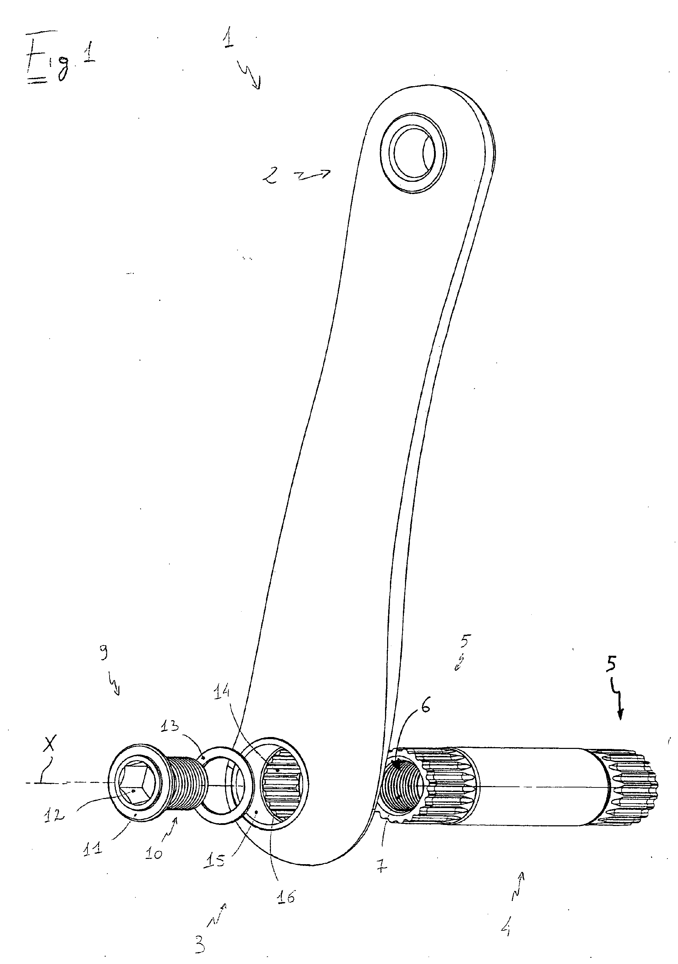

Figure 1 represents a left pedal crank 1 comprising an elongated body having, at one end, a hole 2 for the attachment of the pedal (not shown) and, at the other end, a receiving seat 3 for a central axle 4. The central axle 4 belongs to the bottom bracket of a bicycle transmission, which is in turn mounted in a suitable hole formed in the bicycle frame; only the axis X of the bottom bracket is shown in figure 1.

If the pedal crank 1 is made entirely of metal, the seat 3 is formed directly in the material that constitutes the pedal crank 1 itself. In a variant embodiment, the pedal crank 1 can be made from composite materials (such as structural fibres incorporated in a matrix of polymeric material, for example carbon fibre in thermo-setting resin) and in such a case the seat 3 can be formed directly in the material that constitutes the pedal crank 1 itself, or else it can be formed on an insert associated with the body of the pedal crank 1, for example a metal or carbon fibre insert, incorporated in the body of the pedal crank 1.

The central axle 4 is hollow and substantially tubular and at its ends it comprises respective coupling zones 5 with the left pedal crank 1 and with the right pedal crank (the latter of which is not shown).

Each coupling zone 5 of the central axle 4 is provided with a central hole 6 with an internal threading 7 for screwing engagement with an attachment element of the pedal crank 1, such as an attachment screw 9.

The attachment screw 9 comprises a threaded shank 10, a flanged head 11 and a hexagonal recess 12 for engagement with a manoeuvring tool (not illustrated).

The seat 3 of the pedal crank 1 comprises a first coupling zone 14 with the coupling zone 5 of the central axle 4 and a second zone 15, adjacent to the first coupling zone 14 and with a greater diameter than it. Between the two zones 14 and 15 an annular abutment surface 16 is defined. An anti-loosening washer 13 is arranged between the head 11 of the screw 9 and the annular abutment surface 16 in the seat 3 of the pedal crank 1.

When the pedal crank 1 is assembled to the central axle 4, the internal threading 7 of the coupling zone 5 of the central axle 4 is in screwing engagement with the threaded shank 10 of the screw 9. The head 11 of the attachment screw 9 is arranged completely inside the second zone 15; such a zone can then possibly be closed through the application of a lid, not provided in the illustrated example.

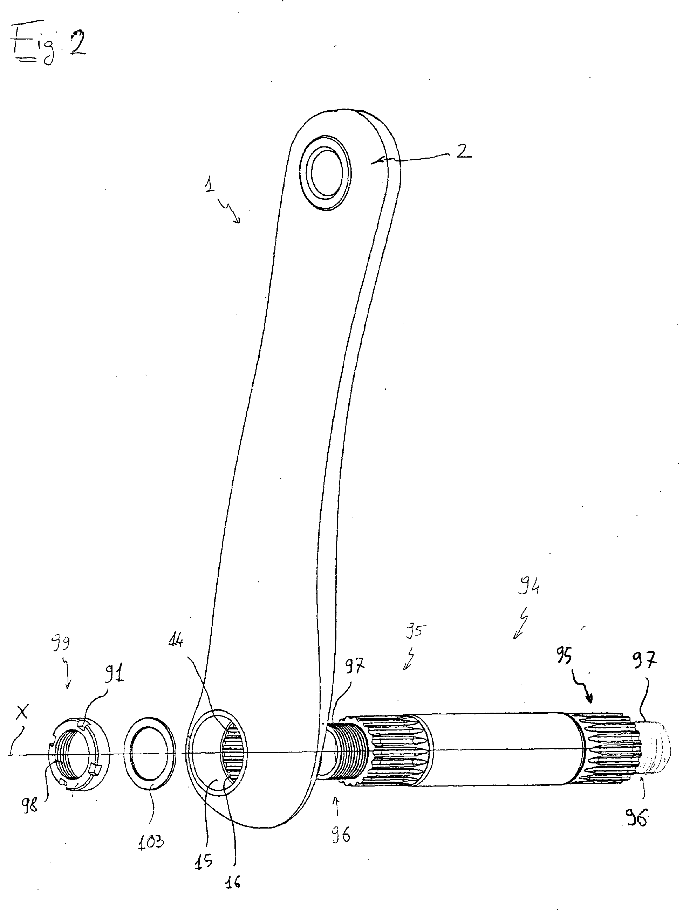

Figure 2 illustrates a pedal crank 1 (the same as that of figure 1, and therefore numbered in the same way) and a central axle 94. The axle 94, close to its ends, comprises both two respective coupling zones 95 with the left pedal crank 1 and with the right pedal crank (the latter of which is not shown), and two respective cylindrical shanks 96, projecting axially with respect to the zones 95 and provided with an external threading 97 for screwing engagement with an attachment element of the pedal crank, such as an attachment ring nut 99. The attachment ring nut 99 consists of an annular element provided with internal threading 98 that engages on the external threading 97 of the shank 96 of the central axle 94 and with four outer notches 91 for engagement with a manoeuvring tool (not illustrated). As for the embodiment of figure 1, an antifriction washer 103 is arranged between the ring nut 99 and the annular abutment surface 16 in the seat 3 of the pedal crank 1.

When the pedal crank 1 is assembled to the central axle 94, the external threading 97 of the cylindrical shank 96 of the central axle 94 is in screwing engagement with the internal threading 98 of the attachment ring nut 99. The ring nut 99 is arranged completely inside the second zone 15 of the seat 3; as for the embodiment of figure 1, such a zone can then possibly be closed through the application of a lid, not provided in the illustrated example.

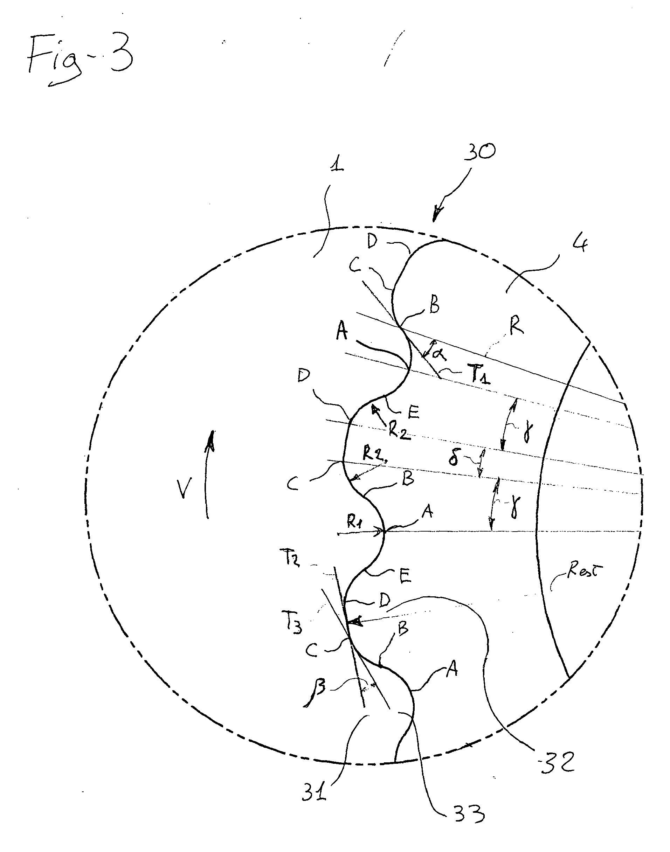

Figure 3 illustrates an enlarged view of a portion of a coupling profile 30 according to the invention; it should be understood that the coupling profile 30 extends with regularity on all 360° about the axis X of the bottom bracket, possibly with a discontinuity having a key assembly function. For greater clarity, in figure 3 the direction of rotation of the pedal crank 1 during pedalling forwards is indicated with V; moreover, again for the sake of clarity, the zones around the coupling profile 30 are respectively numbered 1 and 4 to indicate the arrangement of pedal crank and axle; however, it is clear ― as already explained - that the illustrated coupling profile 30 is an ideal outline, and that the actual outer profile of the axle 4 and inner profile of the seat 3 of the pedal crank 1 can possibly depart from such an ideal outline.

The coupling profile 30 comprises a periodically repeated succession about the axis X of three close lines that are filleted each other, indicated hereafter and in the figures through the respective end points: a power transmission line AC, an outer arc CD ed an idle line DA.

The power transmission line AC comprises a first portion of line AB formed from an arc of circumference having radius R1, convex towards the axis X, and a second portion of line BC formed from an arc of circumference having radius R2, concave towards the axis X. The two portions AB and BC are filleted each other tangentially, i.e. in point B the tangent to the portion AB coincides with the tangent to the portion BC; such a tangent T1 is inclined with respect to the radial direction R by an angle á equal to about 30°. Preferably, the radii R1 and R2 are the same.

The outer arc CD comprises a portion of an outer circumference 31 of the coupling profile 30, and therefore has Rest radius. The outer arc CD is filleted to the power transmission line AC in point C according to an angle β (defined between the respective tangents T2 and T3 in which T2 is the tangent of the outer arc CD and T3 is the tangent of the portion BC of the power transmission line) of less than 45°, preferably less than 20°, and even more preferably substantially equal to 0°; in the illustrated example β is set different to zero, in order to be able to highlight it better.

The idle line DA is equal and symmetrical to the power transmission line AC with respect to the outer arc CD, and thus comprises a first portion of line DE formed from an arc of circumference having radius R2, concave towards the axis X, and a second portion of line EA formed from an arc of circumference having radius R1, convex towards the axis X. The two portions DE and EA are filleted each other tangentially, i.e. in the point E the tangent to the portion DE coincides with the tangent to the portion EA; such a tangent is inclined with respect to the radial direction by the angle á equal to about 30°.

The portion of line EA and the portion of line AB are not only filleted each other tangentially, but are more precisely extensions of each other, i.e. they are portions of the same arc of circumference having radius R1. Preferably, R1 is equal to the distance in the radial direction of the point A from the outer circumference 31.

Each power transmission line AC (and therefore also each idle line DA) has an extension in the angular direction about the axis X equal to an angle γ, whereas each outer arc CD has an extension in the angular direction about the axis X equal to an angle δ. In accordance with the invention, preferably the angle δ is not greater than the angle γ and is equal to at least one tenth, preferably to at least two tenths and even more preferably to at least four tenths, of the angle γ.

The triad of lines AB, BD and DA as stated is repeated along the 360° about the axis X and therefore the coupling profile 30 defines a succession of filleted loops, which can be considered from the point of view of the axle 4 or from that of the pedal crank 1. By adopting the point of view of the axle 4 (which may be more instinctive looking at figure 3) the aforementioned loops thus comprise ribs 32 and grooves 33. The number of ribs 32 and therefore of grooves 33 can be chosen by the designer of the transmission; the greater the number, the lesser the extension in the angular or circumferential direction of the ribs 32 and grooves 33 shall be.

In the following table the characteristic values of some example coupling profiles of the invention are summed up, referring to a coupling profile with Rest radius outer circumference equal to 9.8 mm.

| n° ribs | angle δ | angle γ | R1=R2 | angle á |
|---|---|---|---|---|
| 16 | 7.36° | 7.57° | 0.75 mm | 30° |
| 20 | 2.86° | 7.57° | 0.75 mm | 30° |
| 22 | 1.22° | 7.57° | 0.75 mm | 30° |
| 24 | 2° | 6.5° | 0.65 mm | 28.7° |
| 24 | 2° | 6.5° | 0.6 mm | 25.6° |

A coupling profile according to the invention, thanks to the absence of sharp edge zones on the outer surface of the central axle and on the matching surface of the hole made in the pedal crank, allows a homogeneous distribution of the stresses both in the pedal crank and in the central axle; consequently, this coupling profile allows the weight of the transmission to be reduced without reducing its strength increasing the risks of breaking, i.e. it allows strength to be increased without increasing weight.

A profile according to the invention, moreover, thanks to the presence of relatively extensive portions along the outer circumference of the profile, ensures good ease of assembly and centring of the pedal cranks with respect to the central axle.

## Claims

1. Coupling profile (30) between a central axle (4) of a bottom bracket of a bicycle transmission and a pedal crank (1), comprising, in a plane transversal to the axis (X) of the bottom bracket, outer arcs (CD) belonging to the same outer circumference (31) of the coupling, each of such outer arcs (CD) being flanked and filleted on one side to a power transmission line (AC) and on the opposite side to an idle line (DA), in which the power transmission line (AC) and the idle line (DA) are symmetrical with respect to the outer arc (CD) that separates them, **characterised in that** the outer arc (CD) has an angular extension (δ) about the axis (X) of the bottom bracket equal to at least one tenth of the angular extension (γ) of the power transmission line (AC), and **in that** the power transmission line (AC) and the idle line (DA) are filleted to the outer arc according to an angle (β) smaller than 45°.

2. Profile (30) according to claim 1, wherein the outer arc (CD) has an angular extension (δ) about the axis (X) of the bottom bracket equal to at least two tenths of the angular extension (γ) of the power transmission line (AC).

3. Profile (30) according to claim 1, wherein the outer arc (CD) has an angular extension (δ) about the axis (X) of the bottom bracket equal to at least four tenths of the angular extension (γ) of the power transmission line (AC).

4. Profile (30) according to claim 1, wherein the outer arc (CD) has an angular extension (δ) about the axis (X) of the bottom bracket equal at most to the angular extension (γ) of the power transmission line (AC).

5. Profile (30) according to claim 1, comprising twenty triads each comprising a power transmission line (AC), an outer arc (CD) and an idle line (DA), wherein the outer arc (CD) has an angular extension (δ) about the axis (X) of the bottom bracket equal to about 3° and each of the power transmission line (AC) and the idle line (DA) has an angular extension (γ) of about 7.5°.

6. Profile (30) according to claim 1, wherein the power transmission line (AC) and the idle line (DA) are filleted tangentially to the outer arc (CD).

7. Profile (30) according to claim 1, wherein the power transmission line (AC) and the idle line (DA) comprise portions of line (DE, EA, AB, BC) all filleted each other tangentially.

8. Profile (30) according to claim 1, wherein the idle line (DA) and the power transmission line (AC) each comprise a first arc of circumference (DE, BC) that is concave towards the axis (X) of the bottom bracket and a second arc of circumference (EA, AB) that is convex towards the axis (X) of the bottom bracket.

9. Profile (30) according to claim 8, wherein the second convex arc (EA) of the idle line (DA) and the second convex arc (AB) of the adjacent power transmission line (AC) are extensions of each other.

10. Profile (30) according to claim 8, wherein the first concave arc (DE, BC) and the second convex arc (EA, AB) of the idle line (DA) and of the power transmission line (AC) have the same radius (R1, R2).

11. Central axle (4; 94) of a bottom bracket of a bicycle transmission, comprising two coupling zones (5; 95) for pedal cranks (1) close to each of the two ends thereof, **characterised in that** such zones are externally shaped according to a coupling profile (30) in accordance with any one of claims 1 to 10.

12. Axle (4) according to claim 11, wherein the axle (4) is hollow and comprises an internal threading (7) at at least one of its ends, for the screwing engagement with an attachment element (9) of the pedal crank (1).

13. Axle (94) according to claim 11, comprising, at at least one of its two ends and adjacent to the respective coupling zone (95) for the pedal crank (1), a shank (96) provided with an external threading (97) for the screwing engagement with an attachment element (99) of the pedal crank (1).

14. Axle (4; 94) according to any one of claims 11 to 13, **characterised in that** it is made from steel.

15. Pedal crank (1) of a bicycle transmission, comprising a receiving seat (3) for a central axle (4) of a bottom bracket, **characterised in that** such a seat (3) is shaped according to a coupling profile (30) in accordance with any one of claims 1 to 10.

16. Pedal crank (1) according to claim 15, wherein at least the zone in which the receiving seat (3) is formed is made from aluminium alloy.
